# NEUE EUROPÄISCHE PATENTSCHRIFT

(11) **EP 0 967 492 B2**
(45) Veröffentlichungstag und Bekanntmachung des Hinweises auf die Entscheidung über den Einspruch: **22.01.2014**
(45) Hinweis auf die Patenterteilung: 16.03.2005
(21) Anmeldenummer: 99111773.0
(22) Anmeldetag: 18.06.1999
(51) Int. Cl.: G01S 17/02, G01S 7/497

(54) **Verfahren zur optoelektronischen Überwachung eines Schutzbereichs**
Method for opto-electronic surveillance of a guard area
Méthode pour surveillance opto-électronique de zone de garde

(30) Priorität: 24.06.1998 DE 19828000
(43) Veröffentlichungstag der Anmeldung: 29.12.1999
(73) Patentinhaber: SICK AG, 79183 Waldkirch (DE)
(72) Erfinder: Wanner, Theodor, Dr., 79183 Waldkirch (DE); Hermann, Jakob, 79297 Winden (DE)

(56) Entgegenhaltungen:
- EP-A- 0 520 247
- DE-A- 4 422 497
- DE-A1- 19 634 269
- DE-C1- 4 405 376
- DE-C1- 19 601 661
- DE-C2- 4 119 797
- US-A- 5 902 998
- RASCHER, M. U. KLEMMT, H.: 'Lichtschranken: Anwendungen in der industriellen Automation', 1987, DR. ALFRED HÜTHIG VERLAG GMBH, HEIDELBERG, ISBN 3778513478 Seite 113

## Beschreibung

Die Erfindung betrifft ein Verfahren zur optoelektronischen Überwachung eines Schutzbereichs nach dem Oberbegriff des Anspruchs 1.

Aus EP 0 520 247 B1 ist eine Überwachungseinrichtung für das berührungslose Erfassen von in einem zu überwachenden Bereich befindlichen oder in diesen Bereich eindringenden Objekten bekannt, bei der der zu überwachende Schutzbereich von einer gegebenenfalls als Retroreflektor ausgebildeten Referenzfläche begrenzt ist, wobei die hiervon reflektierten Sendesignale definierte Hintergrundsignale bilden. Dabei wird in einer Einlemphase aus dem Abstand der Referenzfläche zum Sender/Empfänger eine obere und eine untere Toleranzgrenze berechnet und abgespeichert. Die aktuellen Abstandswerte werden mit den Sollwerten verglichen. Liegt ein Abstandswert außerhalb der Toleranzgrenzen, so wird auf das Vorhandensein eines in den zu überwachenden Bereich eingedrungenen Objekts geschlossen. Dies hat jedoch den Nachteil, daß die Referenzfläche den Schutzbereich begrenzt, wobei außerdem der Abstand zwischen der Überwachungseinrichtung und der Referenzfläche bis auf einen Toleranzbereich festgelegt ist. Hierdurch läßt sich die Überwachungseinrichtung beispielsweise nicht auf in größerem Umfang verfahrbaren Geräten verwenden.

Aus DE 89 12 983 U1 ist eine Anordnung zur Raumüberwachung nach einem Radar-ähnlichen Impuls-Echo-Verfahren unter Verwendung von Ultraschall- oder Infrarotstrahlung unter Ausnutzung des Doppler-Effektes bekannt, wobei ein Soll-Profil gespeichert wird, das beispielsweise bei der Überwachung eines Kraftfahrzeuginnenraums durch die dort befindlichen Kopfstützen, Fensterholme und dergleichen entsteht. Weicht das Soll-Profil von einem festgestellten Ist-Profil ab, etwa indem ein Gegenstand oder eine Person in den Schutzbereich gelangt, kann über eine Vergleicherschaltung ein Alarmzustand signalisiert werden. Auch hierbei wird somit eine feste Referenzkontur überwacht, die mit dem überwachten Schutzbereich übereinstimmt. Solange die Abweichungen des Ist-Profils unter einem Toleranzwert liegen, d.h. kein Alarmzustand vorliegt, wird das Soll-Profil entsprechend an sich ändernde Umgebungsbedingungen wie auftretende Luftschlieren, die sich beispielsweise infolge Sonneneinstrahlung ergeben, angepaßt. Hierdurch wird aber keine grundsätzliche Veränderung des Soll-Profils und dessen Übereinstimmung mit dem überwachten Schutzbereich ermöglicht.

In der Sicherheitstechnik ist es ferner üblich, Überwachungseinrichtungen einzusetzen, die nach dem Arbeitsstromprinzip arbeiten, d.h. es wird Stromfluß benötigt, um die Ausgänge aktiv zu halten. Wird aber der Stromfluß unterbrochen, so werden die Ausgänge inaktiv, wodurch ein sicherer Zustand für eine zu überwachende Maschine od.dgl. erreicht wird.

Bei optoelektronischen Überwachungseinrichtungen wird das Arbeitsstromprinzip auf den Lichtweg übertragen, d.h. daß der Empfänger das vom Sender ausgesandte Licht empfangen muß, um die Ausgänge aktiv zu halten. Wird vom Empfänger kein Licht detektiert, so werden die Ausgänge inaktiv geschaltet, um den sicheren Zustand der Maschine einzuleiten. Der Grund, weshalb der Empfänger kein Licht detektiert, kann u.a. folgende Ursachen haben:
- Es befindet sich ein Objekt im Überwachungsbereich (Lichtweg).
- Der Sender oder der Empfänger ist defekt
- Die Verschmutzung der Abschlußscheiben ist zu hoch.
In jedem dieser Fälle werden die Ausgänge inaktiv geschaltet, um einen sicheren Zustand der Maschine zu erreichen. Bei Einweglichtschranken, Lichtgittern od.dgl. wird der Überwachungsbereich festgelegt durch die Entfernung zwischen Sender und Empfänger, bei Reflexlichtschranken dagegen durch die Entfernung zwischen Sender/Empfänger und einem Reflektor.

Bei Überwachungseinrichtungen, die die vom Objekt reflektierte Strahlung zur Auswertung der Objektentfernung (tastendes Prinzip) für die Bereichsüberwachung verwenden, kann das Arbeitsstromprinzip nicht angewandt werden. Befindet sich kein Objekt im Überwachungsbereich, so wird auch kein Licht zum Empfänger reflektiert. Dadurch kann nicht von einem Fehlverhalten ausgegangen werden, wenn kein Licht vom Empfänger detektiert wird. Dadurch können die oben beschriebenen Fehlerursachen nicht automatisch zu einem sicheren Systemzustand führen. Um diese Fehler zu erkennen, müssen umfangreiche Tests durchgeführt werden. Dies betrifft vor allem die Überwachung der Verschmutzung der Frontscheibe sowie die Überwachung der Alterung bzw. des Ausfalls von Sender und Empfänger.

Aufgabe der vorliegenden Erfindung ist es, ein Verfahren der eingangs genannten Art zu schaffen, bei dem der Schutzbereich nicht durch eine Referenzfläche begrenzt und unabhängig von einer solchen definierbar ist.

Diese Aufgabe wird entsprechend dem kennzeichnenden Teil des Anspruchs 1 gelöst.

Hierbei wird von einem Sender einer optoelektronischen Überwachungseinrichtung ein einen Schutzbereich periodisch abtastender Lichtstrahl ausgesandt und ein von einem im Schutzbereich befindlichen Objekt zu einem Empfänger der Überwachungseinrichtung reflektierter Lichtstrahl zur Entfernungsmessung herangezogen. Beim jeweiligen Abtasten des Schutzbereichs wird die Detektion einer in Senderichtung des Lichtstrahls außerhalb des Schutzbereichs befindlichen Kontur bei fehlendem Objekt im Schutzbereich dazu verwendet, ein "freies Schutzfeld" anzeigendes Signal zu erzeugen. Bei dieser Kontur kann es sich um eine beliebige Kontur handeln, die beispielsweise aus Wänden, Regalen, Maschinen od.dgl. gebildet wird. Diese Kontur begrenzt den Schutzbereich flächenmäßig nicht, sondern ist unabhängig vom Schutzbereich, der kleiner als diese Kontur ist. Außerdem kann sich diese Kontur auch beliebig schnell ändern (solange sie nicht in den überwachten Schutzbereich gelangt), ohne daß fälschlicherweise ein Objekt im Schutzbereich gemeldet wird. Eine Referenzfläche, die den Schutzbereich begrenzt und gleichbleibende Hintergrundsignale liefert, wird nicht benötigt.

Wird vom Empfänger über eine bestimmte Zeit kein Licht detektiert, und zwar auch nicht von der umgebenden Kontur, so führt dies dazu, daß ein "kein freies Schutzfeld" anzeigendes Signal erzeugt wird.

Der Schutzbereich endet mit Abstand von den Kontur, so daß beispielsweise eine Person, die sich zwischen der Kontur und dem Schutzbereich aufhält, nicht als im Schutzbereich befindliches Objekt erfaßt wird.

Die Detektionssicherheit eines im Schutzbereich befindlichen Objektes braucht nicht durch umfangreiche Tests nachgewiesen zu werden, sondern wird aufgrund des Auswerteverfahrens gewährleistet. Besondere Maßnahmen zur Überwachung der Frontscheibenverschmutzung der Überwachungseinrichtung bzw. der Alterung oder des Ausfalls von Sender bzw. Empfänger der Überwachungseinrichtung sind nicht notwendig. Hierdurch läßt sich somit trotz der Tatsache, daß nach dem tastenden Prinzip gearbeitet wird, ein entsprechend hoher Sicherheitslevel erreichen.

Die Bereichsüberwachung selbst erfolgt hierbei über die ermittelte Objektentfernung, die über die Lichtlaufzeit oder durch Triangulation bestimmt werden kann.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt schematisch eine optoelektronische Überwachungseinrich-tung.
Fig. 2 und 3 zeigen jeweils eine Darstellung eines von einer Überwachungseinrichtung zu überwachenden Schutzbereichs in zwei unterschiedlichen Ansichten in Draufsicht bzw. von der Überwachungs-einrichtung aus gesehen.

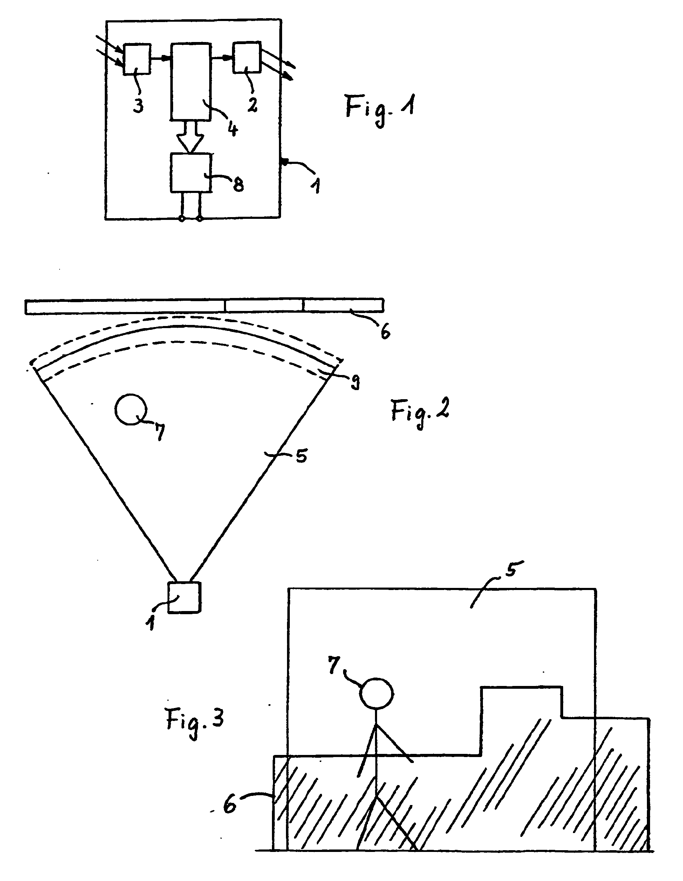

Die in Fig. 1 dargestellte Überwachungseinrichtung 1 umfaßt einen Sender 2 sowie einen Empfänger 3. Vom Sender 2 wird ein aus getakteten kurzen Lichtimpulsen bestehender Lichtstrahl einen vorbestimmten Raumwinkelbereich abtastend ausgesandt und bei entsprechender Reflexion im Empfänger 3 detektiert. Ein die Lichtlaufzeit vom Sender 2 zum Empfänger 3 repräsentierendes Signal wird erzeugt, das in einem Mikroprozessor 4 weiterverarbeitet werden kann. Ein die Amplitude des vom Empfänger 3 empfangenen Lichtstrahls repräsentierendes Signal wird mit einem entsprechenden Sollwert verglichen.

Durch entsprechende Wahl des Sollwerts für die Entfernungsmessung, in dem Ausführungsbeispiel der Lichtlaufzeit, wird somit ein zu überwachender Schutzbereich 5 von der Überwachungseinrichtung 1 überwacht. Irgendeine Kontur 6, die größer als der zu überwachende Schutzbereich 5 ist, sich außerhalb des Schutzbereichs 5 befindet und ein Signal mit einer über einem Rauschpegel liegenden Mindestamplitude liefert, wird durch einen vom Sender 2 ausgesandten, den Schutzbereich 5 periodisch abtastenden Lichtstrahl erfaßt und über die Entfernungsmessung als außerhalb des Schutzbereichs 5 liegend erkannt. Dementsprechend wird dies dazu verwendet, ein "freies Schutzfeld" anzeigendes Signal an einem entsprechenden Ausgang 8 des Mikroprozessors 4 zu erzeugen.

Ein Objekt 7, das in den Schutzbereich 5 eindringt und dessen reflektierter Lichtstrahl ein Signal mit einer über dem Rauschpegel liegenden Mindestamplitude erzeugt, wird dagegen in einer in den Schutzbereich 5 fallenden Entfernung geortet und als Störung angesehen. Am Ausgang 8 wird daher ein "kein freies Schutzfeld" anzeigendes Signal erzeugt, das beispielsweise zum entsprechenden Schalten eines Relais verwendet wird, um einen sicheren Zustand einer zu überwachenden Maschine od.dgl. einzuleiten.

Bei einem Objekt 7, das in den Schutzbereich eindringt und dessen reflektierter Lichtstrahl kein Signal mit einer über dem Rauschpegel liegenden Mindestamplitude erzeugt, wird eine Störung gemeldet. Am Ausgang 8 wird daher ein "kein freies Schutzfeld" anzeigendes Signal erzeugt.

Dagegen wird ein Objekt 7, das sich in dem Bereich zwischen Schutzbereich 5 und Kontur 6 befindet bzw.in diesen Bereich eindringt, als zur Kontur 6 gehörig betrachtet, da der Sollwert bezüglich der Entfernung des Objektes 7 von der Überwachungseinrichtung 1 überschritten wird. In diesem Fall wird ebenfalls ein "freies Schutzfeld" anzeigendes Signal erzeugt.

Die Schutzbereichsüberwachung erfolgt somit über die ermittelte Objektentfernung und ist nicht an die Kontur 6 zur Überwachung der Detektionssicherheit gebunden. Der Schutzbereich 5 ist natürlich entsprechend dem Meßfehler der Entfernungsmessung durch einen Toleranzabschnitt 9 begrenzt.

Anstelle eines Senders 2, der den Schutzbereich 5 periodisch abtastet, kann auch ein Sender verwendet werden, der den Schutzbereich "ausleuchtet", beispielsweise ein Array aus Laserdioden oder eine andere Lichtquelle, wobei dann als Empfänger ein CCD-Array verwendet wird, über den auch die Kontur 6 aufgenommen wird. Das von dem CCD-Array erhaltene Bild wird abgetastet und, wie vorstehend beschrieben, ausgewertet.

## Patentansprüche

1. Verfahren zur optoelektronischen Überwachung eines sich über eine vorbestimmte Distanz zu einer einen Sender (2) und einen Empfänger (3) umfassenden Überwachungseinrichtung (1) erstreckenden Schutzbereichs (5), der periodisch durch den vom Sender (2) ausgesandten Lichtstrahl abgetastet wird und ein von einem im Schutzbereich (5) befindlichen Objekt (7) zu dem Empfänger (3) reflektierter Lichtstrahl zur Entfernungsmessung zwischen diesen ausgewertet wird, **dadurch gekennzeichnet, dass** die vorbestimmte Distanz unabhängig von einer Kontur (6) definiert wird, wobei die Kontur sich in Senderichtung des Lichtstrahls außerhalb des Schutzbereichs (5) befindet, mit Entfernungswerten größer als die vorbestimmte Distanz und; daß beim Abtasten des Schutzbereichs (5) die Detektion der Kontur (6) bei fehlendem Objekt (7) im Schutzbereich (5) dazu verwendet wird, ein "freies Schutzfeld" anzeigendes Signal zu erzeugen.

2. Verfahren nach Anspruch 1, **dadurch gekennzeichnet, daß** bei fehlender Kontur nach einer bestimmten Zeit ein "kein freies Schutzfeld" anzeigendes Signal erzeugt wird.

3. Verfahren nach Anspruch 1 oder 2, **dadurch gekennzeichnet, daß** die Entfernungsmessung über eine Lichtlaufzeitmessung vorgenommen wird.

4. Verfahren nach Anspruch 1 oder 2, **dadurch gekennzeichnet, daß** die Entfernungsmessung über eine Triangulationsmessung vorgenommen wird.

## Claims

1. Method for optoelectronic monitoring of a protection area (5) which extends over a predetermined distance with respect to a monitoring device (1) which has a transmitter (2) and a receiver (3), in which the protection area (5) is periodically scanned by a light beam transmitted from the transmitter (2), and a light beam which is reflected to the receiver (3) from an object (7) which is located in the protection area (5) is evaluated in order to measure the distance between them, **characterized in that**, the predetermined distance is defined independently from a contour (6), whereby the contour (6) is located outside of the protection area (5) in the transmission direction of the light beam and has distance values which are greater than the predetermined distance and **in that** during the scanning of the protection area (5), the detection of the contour (6) is used to produce a signal which indicates a "free protection area", when no object (7) is present in the protection area (5).

2. Method according to Claim 1, **characterized in that**, when no contour is present, a signal which indicates that the "protection area is not free" is produced after a specific time.

3. Method according to Claim 1 or 2, **characterized in that** the distance measurement is carried out by means of a light delay time measurement.

4. Method according to Claim 1 or 2, **characterized in that** the distance measurement is carried out by means of a triangulation measurement.

## Revendications

1. Procede destiné a la surveillance optoélectronique d'une zone protégée (5) s'étendant sur une distance prédéterminée vers un dispositif de surveillance (1) comportant un emetteur (2) et un recepteur (3), la zone protégée est balayée par un faisceau lumineux emis par l'emetteur (2), et un faisceau lumineux réfléchi vers le récepteur (3) par un objet (7) se trouvant dans la zone protégée (5) est évalué pour la mesure de distance entre ceux-ci, **caracterise en ce que**, la distance prédéterminée est définie indépendant d'un contour (6) comment le contour (6) se trouvant dans la direction d'emission du faisceau lumineux en dehors de la zone protégée (5) avec des valeur des distances qui est plus grands que la distance prédéterminée et lors du balayage de la zone protégée (5), la détection du contour (6) est utilisée, en l'absence d'objet (7) dans la zone protégée (5), pour générer un signal indiquant un "champ protage libre".

2. Procede selon la revendication 1, **caracterise en ce que**, en l'absence de contour, un signal indiquant un "aucun champ protage libre" est genere apres un certain temps.

3. Procede selon la revendication 1 ou 2, **caracterise en ce que** la mesure de distance est effectuée par l'intermediaire d'une mesure de temps de propagation de la lumiere.

4. Procede selon la revendication 1 ou 2, **caracterise en ce que** la mesure de distance est effectuee par l'intermediaire d'une mesure de triangulation.
